# EUROPEAN PATENT APPLICATION

(11) **EP 4 546 101 A1**
(43) Date of publication of application: **30.04.2025**
(21) Application number: 24179238.1
(22) Date of filing: 31.05.2024
(51) Int. Cl.: G06F 3/0482, G06F 3/04842, G06F 3/0483, G06F 3/04845, G06F 3/04847

(54) **METHOD AND APPARATUS FOR EDITING LOCK SCREEN INTERFACE AND STORAGE MEDIUM**

(30) Priority: 26.10.2023 CN 202311403589
(71) Applicant: Beijing Xiaomi Mobile Software Co., Ltd., Beijing 100085 (CN)
(72) Inventor: ZHOU, Xueyi, Beijing, 100085 (CN); Chun, ZHOU, Beijing, 100085 (CN); PEI, Zetan, Beijing, 100085 (CN); LU, Haixu, Beijing, 100085 (CN); WU, Baolin, Beijing, 100085 (CN)
(74) Representative: Dehns Germany Partnerschaft mbB

(57) **Abstract**

The present disclosure provides a method and an apparatus for editing a lock screen interface and a storage medium. The method for editing a lock screen interface includes: in response to detecting an editing operation to edit the lock screen interface, displaying a first page on a top layer based on a content to be edited corresponding to the editing operation, where at least one content option for editing the content to be edited is displayed on the first page; and editing the content to be edited based on selection of a content option from the at least one content option on the first page. The content to be edited is placed on the top layer and is not obscured by other content, and thus user experience in personalized setting of the lock screen interface can be improved.

## Description

### TECHNICAL FIELD

The present disclosure relates to the technical field of electronic devices, and in particular, to a method and an apparatus for editing a lock screen interface and a storage medium.

### BACKGROUND

With the continuous developments in the field of electronic device technologies, more and more electronic devices have become an important part of people's daily lives. The continuous developments of electronic devices make users have increasingly high requirements for the experience of electronic devices. Personalized electronic device display interfaces can improve users' experience in using electronic devices to a certain extent.

The procedure for performing personalized setting of the display interface by a user also affects the user's experience in using an electronic device. However, when a user sets a personalized interface, inconvenience in the personalized setting of the display interface exists, resulting in a poor user experience.

### SUMMARY

The present disclosure provides a method and an apparatus for editing a lock screen interface, and a storage medium.

According to a first aspect of embodiments of the present disclosure, there is provided a method for editing a lock screen interface, including: in response to detecting an editing operation to edit the lock screen interface, displaying a first page on a top layer based on a content to be edited corresponding to the editing operation, wherein at least one content option for editing the content to be edited is displayed on the first page; and editing the content to be edited based on selection of a content option from the at least one content option on the first page.

In an implementation, detecting the editing operation includes: receiving the editing operation on a lock screen editing interface, wherein the editing operation is used to trigger editing of a pre-set template of the lock screen interface displayed on the lock screen interface; wherein displaying the first page on the top layer includes: displaying a first-level page, wherein a first control option is displayed on the first-level page, and selection of the first control option is used to trigger editing of a template content in the pre-set template; and based on the content to be edited corresponding to the first control option selected by the user on the first-level page, displaying a second-level page on the top layer, wherein a content option for editing the content to be edited is displayed on the second-level page; wherein editing the content to be edited based on the content option selected by the user on the first page includes: editing the content to be edited based on a content option selected by the user on the second-level page.

In an implementation, the content to be edited includes a lock screen wallpaper, the content option includes a second control option, and the second control option is used to trigger editing of the lock screen wallpaper; wherein editing of the content to be edited based on the content option selected by the user on the second-level page includes: in response to detecting that the second control option on the second-level page is selected by the user, displaying a second-level page, wherein different types of wallpapers are classified and displayed on the second-level page, and wallpapers of a same type includes multiple different wallpapers; and based on a wallpaper selected by the user and a wallpaper type selected by the user, returning back to display the first-level page, and displaying the selected wallpaper based on the selected wallpaper type on the first-level page.

In an implementation, the types of wallpapers include a first wallpaper type, and a wallpaper belonging to the first wallpaper type supports an image cutout function; wherein displaying the selected wallpaper based on the selected wallpaper type on the first-level page includes: starting a layering function in the first-level page, and displaying the selected wallpaper that supports image cutout according to a layering effect, wherein the layering function is used to support the image cutout function.

In an implementation, detecting the editing operation includes: receiving the editing operation on the lock screen interface, wherein the editing operation is used to trigger editing of a lock screen content displayed on the lock screen interface; wherein displaying the first page on the top layer includes: displaying a second-level page on the top layer, wherein a content option for editing the content to be edited corresponding to the lock screen content is displayed on the second-level page; wherein editing the content to be edited based on the content option selected by the user on the first page includes: editing the content to be edited based on a content option selected by the user on the second-level page.

In an implementation, the content to be edited includes a screen lock text, the content option includes a screen lock text region, and one or more types of lock screen texts are displayed in the screen lock text region; wherein editing the content to be edited based on the content option selected by the user on the second-level page includes: in response to detecting a selection operation on the lock screen text region, displaying the second-level page, wherein one or more text sub-regions are displayed on the second-level page, and each of the text sub-regions corresponds to a lock screen text type; in response to detecting a selection operation of the user for selecting a text sub-region, displaying a second-level sub-page, wherein a text option is displayed on a top layer of the second-level sub-page, and the text option corresponds to a lock screen text type selected by the user in the text sub-region; and in response to detecting that the user selects a text option, returning back to display the second-level page, wherein a lock screen text corresponding to the text option selected by the user is displayed in the text sub-region on the second-level page selected by the user.

In an implementation, displaying the text option on the top layer of the second-level sub-page includes: displaying the text option in a pop-up window on the second-level sub-page, wherein a distance between a window region displayed in the pop-up window and the text sub-region selected by the user is less than a distance threshold.

In an implementation, a third control option is displayed on the second-level page, the third control option is used to adjust a style of the lock screen text, wherein style includes at least one of: font and color; wherein the method further includes: in response to detecting that the user selects the third control option, displaying the second-level sub-page, wherein a style option corresponding to the third control option is displayed on the second-level sub-page, and the style option displayed on the second-level sub-page corresponds to one or more text sub-regions on the second-level page; and in response to detecting that the user selects a style option, updating a style of one or more text sub-regions corresponding to the style option displayed in the lock screen text region to a style corresponding to the style option selected by the user.

According to a second aspect of embodiments of the present disclosure, there is provided an apparatus for editing a lock screen interface, including:
a display unit configured to, in response to detecting an editing operation to edit the lock screen interface, display a first page on a top layer based on a content to be edited corresponding to the editing operation, wherein at least one content option for editing the content to be edited is displayed on the first page; and
an editing unit configured to edit the content to be edited based on selection of a content option from the at least one content option on the first page.

In an implementation, the displaying unit detects the editing operation by: receiving the editing operation on a lock screen editing interface, wherein the editing operation is used to trigger editing of a pre-set template of the lock screen interface displayed on the lock screen interface; wherein the display unit displays the first page on the top layer by: displaying a first-level page, wherein a first control option is displayed on the first-level page, and selection of the first control option is used to trigger editing of a template content in the pre-set template; and based on the content to be edited corresponding to the first control option selected by the user on the first-level page, displaying a second-level page on the top layer, wherein a content option for editing the content to be edited is displayed on the second-level page; wherein the editing unit edits the content to be edited based on the content option selected by the user on the first page by: editing the content to be edited based on a content option selected by the user on the second-level page.

In an implementation, the content to be edited includes a lock screen wallpaper, the content option includes a second control option, and the second control option is used to trigger editing of the lock screen wallpaper; wherein the editing unit edits the content to be edited based on the content option selected by the user on the second-level page by: in response to detecting that the second control option on the second-level page is selected by the user, displaying a second-level page, wherein different types of wallpapers are classified and displayed on the second-level page, and wallpapers of a same type includes multiple different wallpapers; and based on a wallpaper selected by the user and a wallpaper type selected by the user, returning back to display the first-level page, and displaying the selected wallpaper based on the selected wallpaper type on the first-level page.

In an implementation, the types of wallpapers include a first wallpaper type, and a wallpaper belonging to the first wallpaper type supports an image cutout function; wherein the editing unit displays the selected wallpaper based on the selected wallpaper type on the first-level page by: starting a layering function in the first-level page, and displaying the selected wallpaper that supports image cutout according to a layering effect, wherein the layering function is used to support the image cutout function.

In an implementation, the display unit detects the editing operation by: receiving the editing operation on the lock screen interface, wherein the editing operation is used to trigger editing of a lock screen content displayed on the lock screen interface; wherein the display unit displays the first page on the top layer by: displaying a second-level page on the top layer, wherein a content option for editing the content to be edited corresponding to the lock screen content is displayed on the second-level page; wherein the editing unit edits the content to be edited based on the content option selected by the user on the first page by: editing the content to be edited based on a content option selected by the user on the second-level page.

In an implementation, the content to be edited includes a screen lock text, the content option includes a screen lock text region, and one or more types of lock screen texts are displayed in the screen lock text region; wherein the editing unit edits the content to be edited based on the content option selected by the user on the second-level page by: in response to detecting a selection operation on the lock screen text region, displaying the second-level page, wherein one or more text sub-regions are displayed on the second-level page, and each of the text sub-regions corresponds to a lock screen text type; in response to detecting a selection operation of the user for selecting a text sub-region, displaying a second-level sub-page, wherein a text option is displayed on a top layer of the second-level sub-page, and the text option corresponds to a lock screen text type selected by the user in the text sub-region; and in response to detecting that the user selects a text option, returning back to display the second-level page, wherein a lock screen text corresponding to the text option selected by the user is displayed in the text sub-region on the second-level page selected by the user.

In an implementation, the editing unit displays the text option on the top layer of the second-level sub-page by: displaying the text option in a pop-up window on the second-level sub-page, wherein a distance between a window region displayed in the pop-up window and the text sub-region selected by the user is less than a distance threshold.

In an implementation, a third control option is displayed on the second-level page, the third control option is used to adjust a style of the lock screen text, wherein style includes at least one of: font and color; wherein the editing unit is further configured to: in response to detecting that the user selects the third control option, display the second-level sub-page, wherein a style option corresponding to the third control option is displayed on the second-level sub-page, and the style option displayed on the second-level sub-page corresponds to one or more text sub-regions on the second-level page; and in response to detecting that the user selects a style option, update a style of one or more text sub-regions corresponding to the style option displayed in the lock screen text region to a style corresponding to the style option selected by the user.

According to a third aspect of embodiments of the present disclosure, there is provide an apparatus for editing a lock screen interface, including: a processor; and a memory configured to store instructions executable by the processor; wherein the processor is configured to carry out the method for editing a lock screen interface according to the first aspect or any implementation of the first aspect.

According to a fourth aspect of embodiments of the present disclosure, there is provided a storage medium, wherein instructions are stored in the storage medium, when the instructions in the storage medium are executed by a processor of a terminal, the terminal is caused to carry out the method for editing a lock screen interface according to the first aspect or any implementation of the first aspect.

The technical solutions provided by the embodiments of the present disclosure can have the following advantageous effects. The editing operation for editing the lock screen interface is detected by the electronic device, and the first page containing a content option is displayed on the top layer. In response to detecting the user's selection of a content option on the first page, the content to be edited is edited. By detecting the content to be edited corresponding to the user's editing operation and displaying the content option corresponding to the content to be edited on the top layer, the user can edit the content to be edited on the top layer that is not obscured, and personalized editing of the lock screen interface by the user can be realized based on different content options, thereby improving the user experience.

It should be understood that the foregoing general description and the following detailed description are exemplary and explanatory only, and are not intended to limit the present disclosure.

### BRIEF DESCRIPTION OF THE DRAWINGS

The accompanying drawings, which are incorporated in and constitute a part of the specification, illustrate embodiments consistent with the present disclosure and together with the specification, serve to explain the principles of the present disclosure.
FIG. 1 is a flowchart of a method for editing a lock screen interface according to an example embodiment.
FIG. 2 is a flowchart illustrating a method for editing a lock screen interface based on editing a pre-set template of the lock screen interface according to an example embodiment.
FIG. 3 is a schematic diagram of a lock screen editing interface according to an example embodiment.
FIG. 4 is a schematic diagram of editing a pre-set template of a lock screen interface according to an example embodiment.
FIG. 5 is a flowchart illustrating a method for editing a lock screen interface based on editing a pre-set template of the lock screen interface according to an example embodiment.
FIG. 6 is a schematic diagram illustrating editing of a second-level sub-page in a pre-set template of a lock screen interface according to an example embodiment.
FIG. 7 is a schematic diagram of editing a pre-set template of a lock screen interface according to an example embodiment.
FIG. 8 is a flowchart illustrating a method for editing a lock screen interface based on editing a pre-set template of the lock screen interface according to an example embodiment.
FIG. 9 is a schematic diagram illustrating editing of a pre-set template of a lock screen interface on a layer basis according to an example embodiment.
FIG. 10 is a flowchart of a method for editing a lock screen interface based on editing a lock screen content displayed on the lock screen interface according to an example embodiment.
FIG. 11 is a flowchart of a method for editing a lock screen interface based on editing a lock screen content displayed on the lock screen interface according to an example embodiment.
FIG. 12 is a schematic diagram of editing a lock screen display content of the lock screen interface according to an example embodiment.
FIG. 13 is a schematic diagram of a second-level page for editing the lock screen display content of the lock screen interface according to an example embodiment.
FIG. 14 is a schematic diagram of a second-level page for editing the lock screen display content of the lock screen interface according to an example embodiment.
FIG. 15 is a schematic diagram of a second-level sub-page for editing the lock screen display content of the lock screen interface according to an example embodiment.
FIG. 16 is a schematic diagram of a second-level sub-page for editing the lock screen display content of the lock screen interface according to an example embodiment.
FIG. 17 is a schematic diagram of a second-level page for editing the lock screen display content of the lock screen interface according to an example embodiment.
FIG. 18 is a schematic diagram of a second-level page for editing the lock screen display content of the lock screen interface according to an example embodiment.
FIG. 19 is a flowchart of a method for editing a lock screen interface based on editing a lock screen content displayed on the lock screen interface according to an example embodiment.
FIG. 20 is a flowchart of a method for editing a lock screen interface based on editing a lock screen content displayed on the lock screen interface according to an example embodiment.
FIG. 21 is a schematic diagram of a second-level sub-page for editing the lock screen display content of the lock screen interface according to an example embodiment.
FIG. 22 is a schematic diagram of a second-level sub-page for editing the lock screen display content of the lock screen interface according to an example embodiment.
FIG. 23 is a schematic diagram of a second-level sub-page for editing the lock screen display content of the lock screen interface according to an example embodiment.
FIG. 24 is a schematic diagram of a second-level sub-page for editing the lock screen display content of the lock screen interface according to an example embodiment.
FIG. 25 is a schematic diagram of a situation where a lock screen page is applied according to an example embodiment.
FIG. 26 is a block diagram of an apparatus for editing a lock screen interface according to an example embodiment.
FIG. 27 is a block diagram of an apparatus for editing a lock screen interface according to an example embodiment.

### DETAILED DESCRIPTION

Example embodiments will be described in detail herein and illustrated in the accompanying drawings. When the following description refers to the drawings, the same numbers in different drawings refer to the same or similar elements unless otherwise indicated. The implementations described in the following example embodiments do not represent all implementations consistent with the present disclosure.

The methods for editing a lock screen interface provided by the present disclosure are applied to a scenario of editing a lock screen interface of an electronic device, for example, the methods are applied to a scenario of editing a lock screen interface of a terminal.

With the continuous developments in the field of electronic device technologies, users' requirements for personalized settings of display interfaces of electronic devices are also constantly increasing. However, in related art, when performing personalized editing of a lock screen interface, the part to be edited may be obscured, or the position to be edited may be too small. This may result in that a user cannot properly perform personalized editing of the part to be edited, and thus user experience is reduced.

In the solutions for editing a lock screen interface provided by the present disclosure, an editing operation for editing the lock screen interface is detected by an electronic device, and a first page containing a content option is displayed on the top layer. Based on detecting a content option selected by a user on the first page, a content to be edited is edited. By detecting the content to be edited corresponding to the user's editing operation, the content option corresponding to the content to be edited is displayed on the top layer, so that the user can edit the content to be edited in the top layer that is not obscured, and the user's personalized editing of the lock screen interface can be realized based on different content options, thereby improving the user experience.

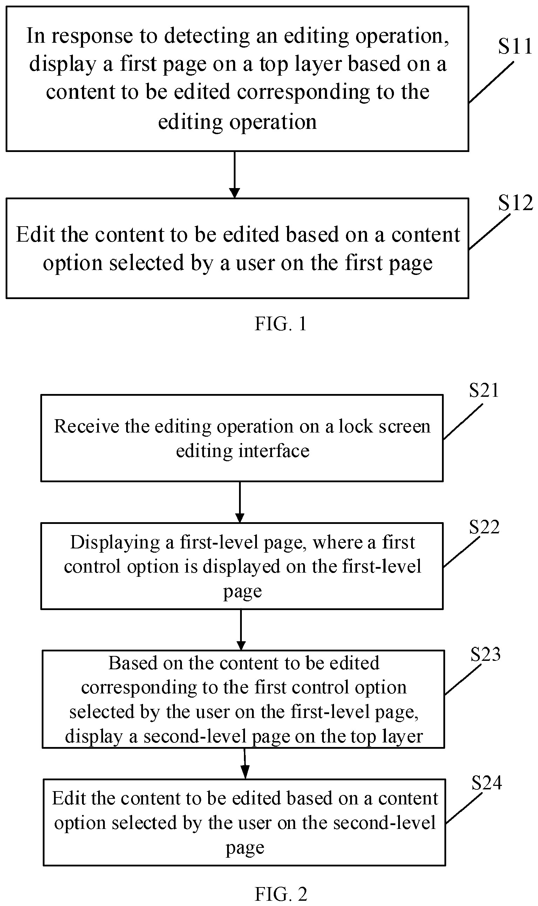

FIG. 1 is a flowchart of a method for editing a lock screen interface according to an example embodiment. As shown in FIG. 1, the method for editing a lock screen interface is applied in a terminal and includes the following steps.

In step S11, in response to detecting an editing operation, a first page is displayed on a top layer based on a content to be edited corresponding to the editing operation.

The editing operation is used to edit the lock screen interface.

Content option(s) for editing the content to be edited is(are) displayed on the first page.

In an embodiment of the present disclosure, different contents in the lock screen interface may be edited through different editing operations.

In an embodiment of the present disclosure, an electronic device may display the first page corresponding to the content to be edited on the top layer based on the content to be edited corresponding to the detected editing operation. Content option(s) for different content(s) to be edited may be displayed on the first page.

In step S12, the content to be edited is edited based on a content option selected by a user on the first page.

In an embodiment of the present disclosure, when the electronic device detects the user's editing operation, it determines the content to be edited corresponding to the editing operation, and displays the first page corresponding to the content to be edited on the top layer. When an operation of the user for selecting a content option on the first page is detected, the content to be edited is edited based on the content option selected by the user.

In the embodiments of the present disclosure, by determining the content to be edited corresponding to the user's editing operation, the content option(s) for the content to be edited is(are) displayed on the first page displayed at the top layer, so that the user can edit the content to be edited according to the content option(s) on the first page. In this way, the content to be edited is placed at the top and is not obscured by other content, thereby improving the user experience in personalized setting of the lock screen interface.

In an embodiment of the present disclosure, the electronic device may receive the user's editing operation in a lock screen editing interface.

In an embodiment of the present disclosure, the editing operation may be that the user edits different contents in the lock screen editing interface.

The editing operation may be editing a pre-set template of the lock screen interface in the lock screen editing interface.

FIG. 2 is a flowchart illustrating a method for editing a lock screen interface based on editing a pre-set template of the lock screen interface according to an example embodiment. As shown in FIG. 2, the method for editing the lock screen interface is applied in a terminal and includes the following steps.

In step S21, an editing operation is received on a lock screen editing interface.

The editing operation is used to trigger editing of a pre-set template of the lock screen interface displayed on the lock screen editing interface.

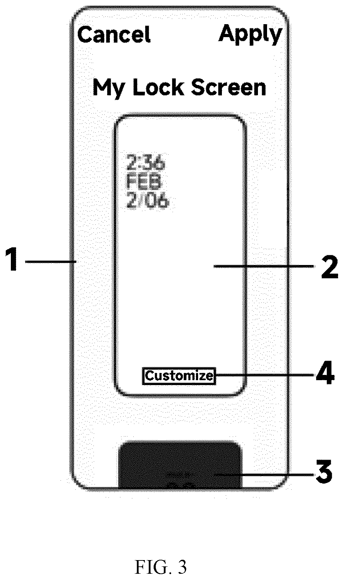

In an embodiment of the present disclosure, before detecting the user's editing instruction for the pre-set template of the lock screen interface, the electronic device may determine the pre-set template to be edited based on the user's operation. FIG. 3 is a schematic diagram of a lock screen editing interface according to an example embodiment. In the lock screen editing interface as shown in FIG. 3, a first-level page 1 includes a first pre-set template 2, a second pre-set template 3 and a first control option 4 in a second-level page. The electronic device may switch to different pre-set templates of the lock screen interface based on different detected user operations. For example, when a swipe-up operation of the user is detected, the first pre-set template 2 (that is, "My Lock Screen") may be switched to the second pre-set template, where the first pre-set template and the second pre-set template are different.

In step S22, the first-level page is displayed, and a first control option is displayed on the first-level page.

Selection of the first control option is used to trigger editing of a template content in the pre-set template.

In an embodiment of the present disclosure, the first-level page may display the pre-set template of the lock screen interface selected by the user, and the first-level page includes the first control option for editing the template content in the pre-set template. As shown in FIG. 3, the pre-set template selected by the user is displayed on the first-level page 1. For example, the pre-set template selected by the user displayed on the first-level page 1 may be the first pre-set template 2, that is, "My Lock Screen" template.

In step S23, a second-level page is displayed on the top layer based on the content to be edited corresponding to the first control option selected by the user on the first-level page.

The second-level page displays a content option for editing the content to be edited.

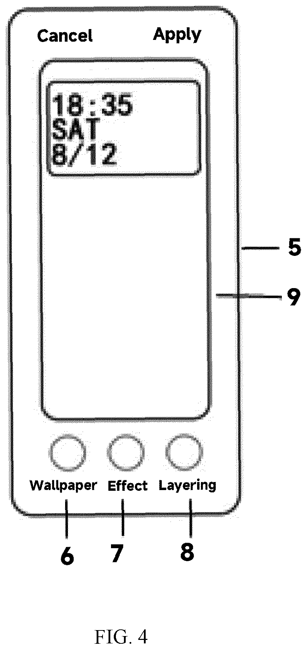

In an embodiment of the present disclosure, when the electronic device detects the user's operation of selecting a first control on the first-level page, the second-level page is displayed on the top layer according to the content to be edited corresponding to the first control. The second-level page may be displayed in the entire display region of the electronic device. FIG. 4 is a schematic diagram of editing a pre-set template of a lock screen interface according to an example embodiment. A second-level page 5 includes a content option 6 for the content to be edited, a content option 7 for the content to be edited, a content option 8 for the content to be edited, and a region 9 corresponding to the content to be edited. For example, as shown in FIG. 3, the electronic device detects that the when the first pre-set template 2 (that is, "My Lock Screen") is displayed on the first-level page 1, the user selects the first control option 4 (that is, "Customize"), the second-level page 5 as shown in FIG. 4 is displayed on the top layer of the electronic device, where the first pre-set template 2 is displayed in the region 9 corresponding to the content to be edited, i.e., the "My Lock Screen" template selected by the user is used as the page for editing.

In an embodiment of the present disclosure, the second-level page may include content option(s) for editing the template content of the preset template, where the content option(s) may be different content options determined by different pre-set templates.

In step S24, the content to be edited is edited based on the content option selected by the user on the second-level page.

In an embodiment of the present disclosure, the electronic device detects the content option selected by the user on the second-level page, and edits the pre-set template content corresponding to the content option.

In an example, as shown in FIG. 4, there may be multiple content options on the second-level page 5. the content options in content option 6, content option 7 and content option 8 may be "Wallpaper", "Effect", and "Layering", respectively. The electronic device may edit the wallpaper, the display effect and layers of the pre-set template according to different content options selected by the user

In an example, there are multiple content options on the second-level page, which may be "color" and "font". The electronic device may edit the color or font in the pre-set template according to the content options selected by the user.

In an embodiment of the present disclosure, the content to be edited in the second-level page may be the lock screen wallpaper.

In an implementation of the present disclosure, the content options on the second-level page may include a second control option. Different content options correspond to different second control options. The second control options may be the content option 6, or the content option 7 or the content option 8 as shown in FIG. 4.

In an implementation of the present disclosure, when the electronic device detects the second control option selected by the user, the pre-set template is edited based on the content to be edited corresponding to the second control option.

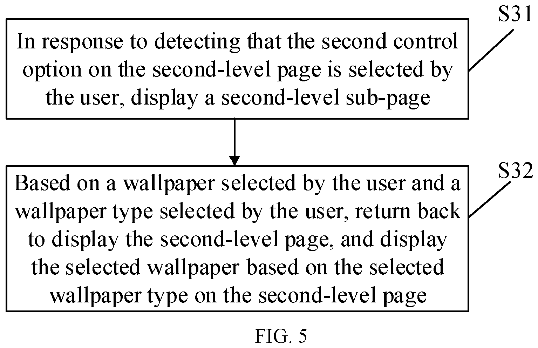

FIG. 5 is a flowchart of a method for editing a lock screen interface based on editing a pre-set template of the lock screen interface according to an example embodiment. As shown in FIG. 5, the method for editing the lock screen interface is applied in a terminal and includes the following steps.

In step S31, in response to detecting that the user selects the second control option on the second-level page, a second-level sub-page is displayed.

Different types of wallpapers are classified and displayed on the second sub-level page, and the same type of wallpapers include multiple different wallpapers.

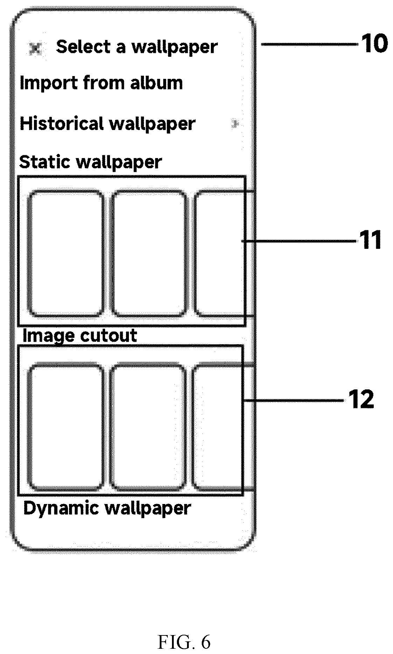

In an embodiment of the present disclosure, when the electronic device detects that the user selects the second control option on the second-level page, the second-level sub-page corresponding to the second control option is displayed on the top layer. FIG. 6 is a schematic diagram illustrating editing of a second-level sub-page in a pre-set template of a lock screen interface according to an example embodiment. A second-level sub-page 10 may include a static wallpaper region 11 and an image cutout region 12. The static wallpaper region 11 is used to display preset static wallpaper(s), and the image cutout region 12 is used to display preset cutout wallpaper(s) with an image cutout function. For example, when the electronic device detects that the user clicks or taps on the second control option of content option 6, that is, the "Wallpaper" control option, on the second-level page 5 as shown in FIG. 4, the second-level sub-page 10 as shown in FIG. 6 is displayed on the top layer of the electronic device. Different types of wallpapers may be displayed on the second-level sub-page 10, and wallpapers of the same type include multiple wallpapers of different styles. As shown in FIG. 6, the second-level sub-page 10 may be a "Select Wallpaper" page. The "Select Wallpaper" page may include a static wallpaper region 11 and an image cutout region 12, where different regions may include multiple wallpapers of the same types.

In step S32, based on the wallpaper selected by the user and the wallpaper type selected by the user, the second-level page is returned to and displayed, and the selected wallpaper is displayed based on the selected wallpaper type on the second-level page.

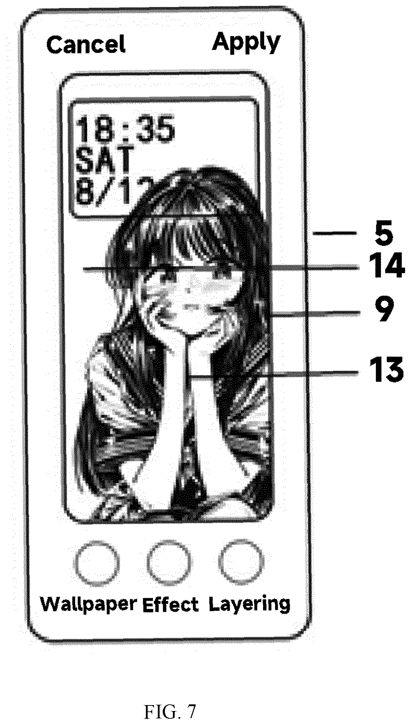

In an embodiment of the present disclosure, when the electronic device determines the wallpaper and wallpaper type selected by the user on the second-level sub-page, the electronic device returns to the second-level page, and displays the wallpaper selected by the user on the second-level page. FIG. 7 is a schematic diagram of editing a pre-set template of a lock screen interface according to an example embodiment. For example, after the electronic device detects the wallpaper which the user determines to select on the second-level sub-page 10 as shown in FIG. 6, the electronic device returns to the second-level page 5 as shown in FIG. 7, and displays the wallpaper selected by the user in the region 9 corresponding to the content to be edited in FIG 7. The wallpaper selected by the user and displayed in the region 9 corresponding to the content to be edited may be a wallpaper with an image cutout function.

In an embodiment of the present disclosure, on the second-level page after the wallpaper is determined, the second control on the second-level page may be used to perform editing by the user.

In an example, the second-level page wallpaper may be zoomed in or zoomed out through different user gestures. For example, when a two-finger moving apart gesture of the user is detected, the wallpaper may be zoomed in; or when a two-finger pinching gesture of the user is detected, the wallpaper may be zoomed out.

In an example, when detecting that the user selects a second control option, for example, the second control option of the content option 7 as shown in FIG. 4 (that is, the "Effect" control option) is selected, the electronic device may edit the selected wallpaper according to different effects.

In an embodiment of the present disclosure, depending on different second control option selected by the user of the electronic device on the second-level interface, the electronic device may display a second-level sub-interface corresponding to the control option, where the second-level sub-interface may be displayed on the second-level page in the form of a pop-up window.

In an example, when the electronic device detects that the user selects the second control option of the content option 7 on the second-level page 5 as shown in FIG. 4, that is, the "Effect" control option is selected, the electronic device may display, on the second-level page, a second-level sub-interface for changing the effect of the pre-set template. The second-level sub-interface may include a stripe effect or a frost effect. Upon detection of a user operation on the second-level sub-interface, different effects of the pre-set template corresponding to different operations are displayed on the first-level page.

In the embodiments of the present disclosure, by detecting the user's selection of the second control option on the second-level page and displaying the corresponding second-level sub-page based on the second control option, different adjustments to the second-level page are achieved, thereby improving the degree of personalization of the second-level page, and improving user experience.

In the embodiments of the present disclosure, wallpapers of different types may be displayed on the second-level sub-page. For example, a first-type wallpaper that supports the image cutout function may be displayed on the second-level sub-page.

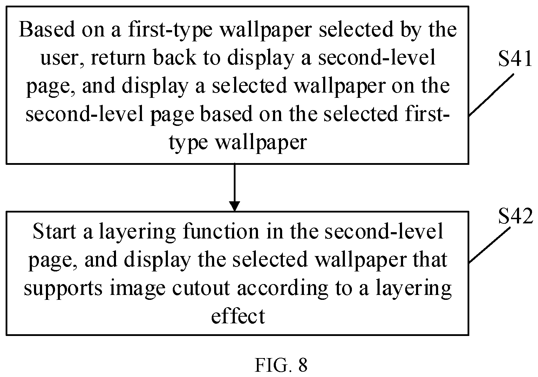

FIG. 8 is a flowchart of a method for editing a lock screen interface based on editing a pre-set template of the lock screen interface according to an example embodiment. As shown in FIG. 8, the method for editing the lock screen interface is applied in a terminal and includes the following step.

In step S41, based on a first-type wallpaper selected by the user, the second-level page is returned to for display, and the selected wallpaper is displayed on the second-level page based on the selected first-type wallpaper.

In an implementation of the present disclosure, when the electronic device detects that the user selects the first-type wallpaper on the second-level sub-page, that is, the wallpaper that supports the image cutout function, the electronic device returns back to the second-level page and displays, on the second-level page, the wallpaper that is selected by the user and supports the image cutout function.

In step S42, a layering function is started on the second-level page, and the selected wallpaper that supports image cutout is displayed according to a layering effect.

The layering function is used to support the image cutout function.

In an embodiment of the present disclosure, when it is detected that the user clicks or taps on the second control option of the content option 8 on the second-level page 5 as shown in FIG. 4, that is, the "Layering" control option is selected, the layering function is started on the second-level page 5, that is, the wallpaper that is selected by the user and supports the image cutout function is displayed according to the layering effect. When the electronic device detects that the user performs different gesture operations on the wallpaper displayed according to the layering effect, different layers of the wallpaper displayed in the layering manner may be edited.

In an embodiment of the present disclosure, different layers in the first-type wallpaper may be different layers preset in the pre-set template, or different layers in the first-type wallpaper may be different layers which are obtained by the terminal by performing layering on the wallpaper based on the image cutout function. The wallpaper that supports the image cutout function may be divided into at least two layers, including a main layer and/or a background layer.

In an embodiment of the present disclosure, when it is detected that the user starts the layering function on the second-level page, the selected wallpaper that supports image cutout is displayed according to the layering effect. The styles of different layers in different wallpapers may be adjusted respectively. The style at least includes color or font.

In an example, when the wallpaper that supports the image cutout function displayed on the second-level page 5 is the first-type wallpaper as shown in FIG. 7, if it is detected that the user clicks or taps on the "Layering" option, the first-type wallpaper selected by the user and displayed in the region 9 corresponding to the content to be edited is divided into a background layer 14 and a character layer 13. And, the background layer 14 and the character layer 13 are respectively edited based on different user gestures. The wallpaper layer to be edited may be determined by clicking or tapping on a background position or a character position in the wallpaper.

In an example, when the electronic device detects that the user clicks or taps on the background layer 14 in the first-type wallpaper as shown in FIG. 7, a corresponding second-level sub-page may be popped up. The background layer 14 in the first-type wallpaper may be edited according to different second control options on the second-level sub-page. For example, the color and font of the background layer may be adjusted based on second control options on the second-level sub-page.

In an example, when the electronic device detects that the user clicks or taps on the character layer 13 in the first-type wallpaper as shown in FIG. 7, a corresponding second-level sub-page may be popped up. A character in the first-type wallpaper may be edited according to different second control options on the second-level sub-page.

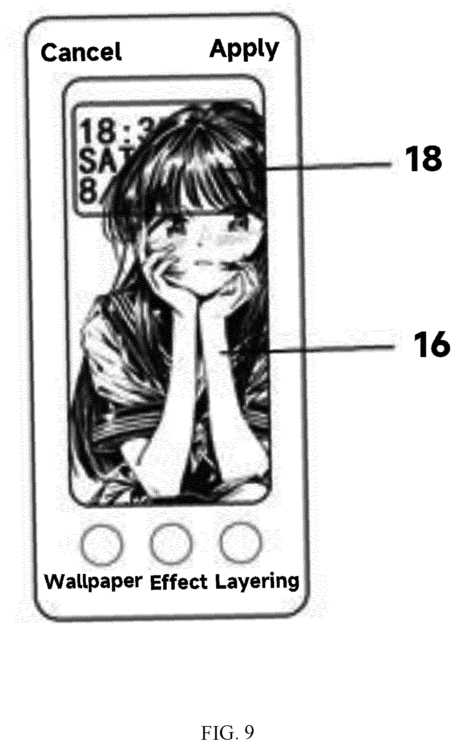

In an example, when the electronic device detects that the user clicks or taps on the character layer 13 in the first-type wallpaper as shown in FIG. 7, the character layer 13 of the first-type wallpaper may be edited according to different user gestures. FIG. 9 is a schematic diagram illustrating editing of a pre-set template of a lock screen interface on a layer basis according to an example embodiment. For example, when a two-finger moving apart gesture of the user is detected, the character layer 13 shown in FIG. 7 may be zoomed in, and the character layer 13 of the second-level page 5 will be enlarged to the character layer 16 as shown in FIG. 9. Alternatively, when a two-finger pinching operation of the user is detected, the character layer is zoomed out, and the second-level page will display a second-level page with a reduced character layer.

In the embodiments of the present disclosure, by respectively editing different layers of a wallpaper that supports the image cutout function on the second-level page, a user can perform personalized operations on a wallpaper in the pre-set template, thereby improving the degree of personalization of the lock screen interface and improving the user experience.

In an embodiment of the present disclosure, the electronic device may receive a user's editing operation on a lock screen editing interface to edit different contents on the lock screen editing interface. The editing operation may be editing a lock screen content displayed on the lock screen interface.

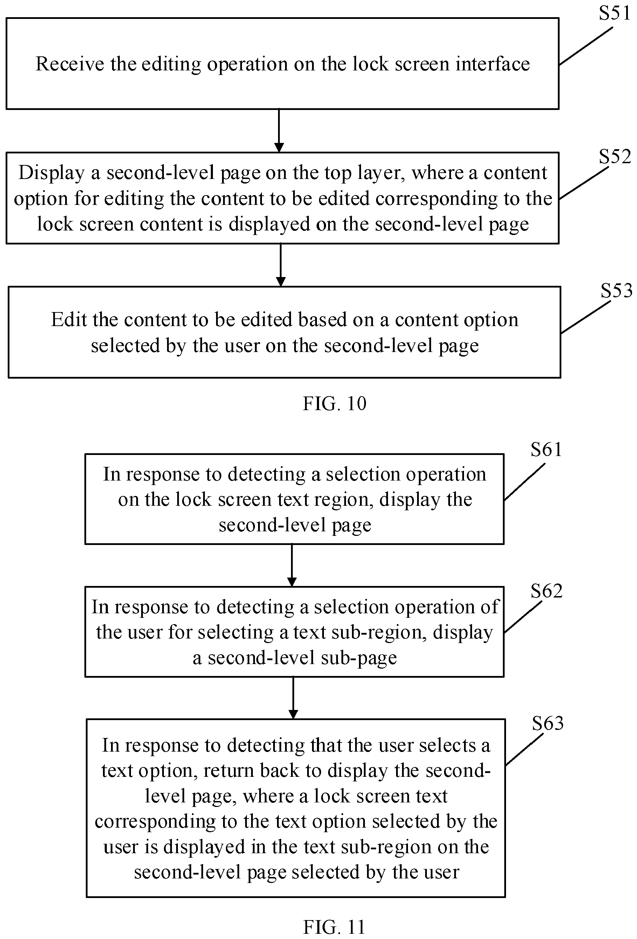

FIG. 10 is a flowchart of a method for editing a lock screen interface based on editing a lock screen content displayed on the lock screen interface according to an example embodiment. As shown in FIG. 10, the method for editing the lock screen interface is applied in a terminal and includes the following steps.

In step S51, an editing operation is received on a lock screen editing interface.

The editing operation is used to trigger editing of a lock screen content displayed on the lock screen interface.

In step S52, a second-level page is displayed on the top layer, where a content option for editing a content to be edited corresponding to the lock screen content is displayed on the second-level page.

In an implementation of the present disclosure, the lock screen editing interface may be entered by detecting, on the lock screen interface, a user's operation of long-pressing the lock screen content displayed on the lock screen interface, and the second-level page may be displayed on the top layer. Alternatively, the second-level page may be displayed on the top layer by detecting the user's click or tap on the lock screen content on the first-level page.

In an embodiment of the present disclosure, the editing operation for triggering the editing of the lock screen content displayed on the lock screen interface may be clicking or tapping on the lock screen content part on the first interface, or may be long-pressing the lock screen content part on the lock screen interface.

In step S53, the content to be edited is edited based on a content option selected by the user on the second-level page.

In an embodiment of the present disclosure, the electronic device detects a content option selected by the user on the second-level page, and edits the lock screen content corresponding to the selected content option.

In an embodiment of the present disclosure, the electronic device may edit different lock screen contents on the second-level page according to different content options selected by the user.

In the embodiments of the present disclosure, when the electronic device detects that the user triggers an operation to edit the lock screen content displayed on the lock screen interface, the electronic device displays the second-level page for editing the lock screen content on the top layer. By monitoring the content option selected by the user on the second-level page, the content to be edited is edited. In this way, the electronic device can edit different positions of the lock screen interface according to different operations of the user, making the lock screen editing interface more convenient and thus improving the user experience.

In an embodiment of the present disclosure, the content to be edited on the second-level page may be a lock screen text.

In an embodiment of the present disclosure, the content option available for the user to select on the second-level page may be a lock screen text region, where one or more types of lock screen texts may be displayed in the lock screen text region.

FIG. 11 is a flowchart of a method for editing a lock screen interface based on editing a lock screen content displayed on the lock screen interface according to an example embodiment. As shown in FIG. 11, the method for editing the lock screen interface is applied in a terminal and includes the following steps.

In step S61, in response to detecting a selection operation on the lock screen text region, the second-level page is displayed.

One or more text sub-regions are displayed on the second-level page, and each text sub-region corresponds to a type of lock screen text.

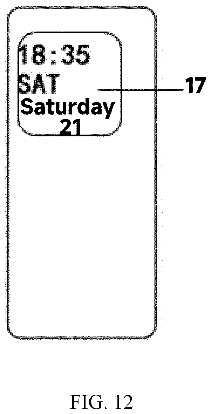

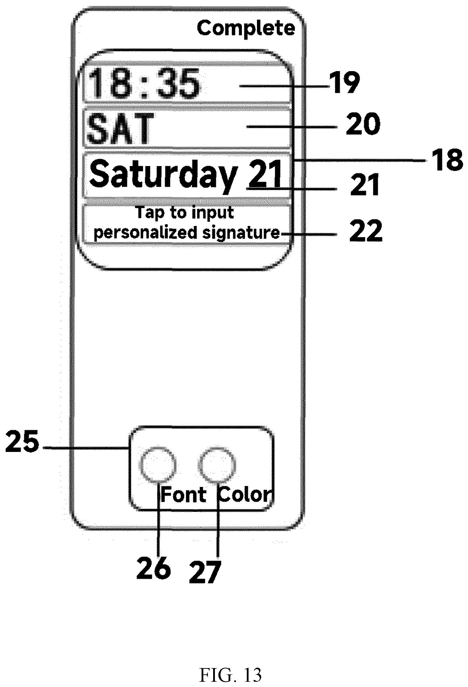

In an embodiment of the present disclosure, FIG. 12 is a schematic diagram of editing a lock screen display content of the lock screen interface according to an example embodiment. The electronic device detecting an operation of the user on the lock screen text region may be that the electronic device detects the user's long-pressing operation on lock screen text region 17 on the lock screen interface as shown in FIG. 12, and the second-level page as shown in FIG. 13 is displayed. FIG. 13 is a schematic diagram of a second-level page for editing the lock screen display content of the lock screen interface according to an example embodiment. As shown in FIG. 13, the second-level page includes multiple text sub-regions, and each text sub-region corresponds to a different type of lock screen text. For example, a first text sub-region 19 in FIG. 13 may be used to display the time, a second text sub-region 20 may be used to display the day of the week, a third text sub-region 21 may be used to display the date, and a fourth text sub-region 22 may be used for the user to input a customized text.

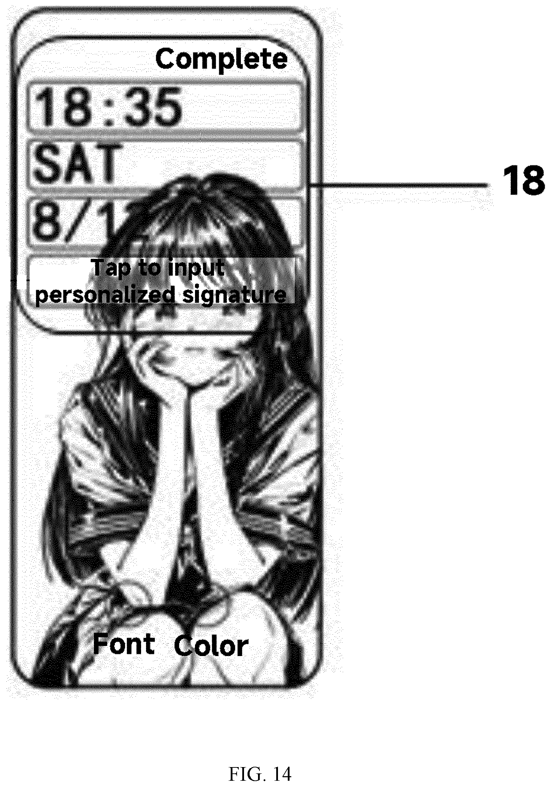

In an embodiment of the present disclosure, FIG. 14 is a schematic diagram of a second-level page for editing the lock screen display content of the lock screen interface according to an example embodiment. The operation of the user on the lock screen text region detected by the electronic device may be a selection operation of the user based on the lock screen text region on the second-level page after the pre-set template of the lock screen is edited. For example, after the user edits the pre-set template of the lock screen interface, the second-level page 5 shown in FIG. 7 is obtained. When the electronic device detects that the user performs selection of the lock screen text region 18 on the second-level page 5, it displays second-level page 5 as shown in FIG. 14. The lock screen text region 18 on the second-level page 5 includes one or more text sub-regions, and each text sub-region corresponds to a different lock screen text.

In step S 62, in response to detecting the user's selection operation of selecting a text sub-region, a second-level sub-page is displayed.

Text option(s) is(are) displayed on the top layer of the second-level sub-page, and the text option(s) corresponds(correspond) to the lock screen text type on the text sub-region selected by the user.

In an embodiment of the present disclosure, the second-level sub-page may obscure a text sub-region that is not selected by the user

In an embodiment of the present disclosure, when the user's selection operations of selecting different text sub-regions are detected, second-level sub-pages corresponding to the text sub-regions are displayed. A text sub-region includes a text option, and the text option is used to edit the text sub-region. Different text sub-regions may include different text options.

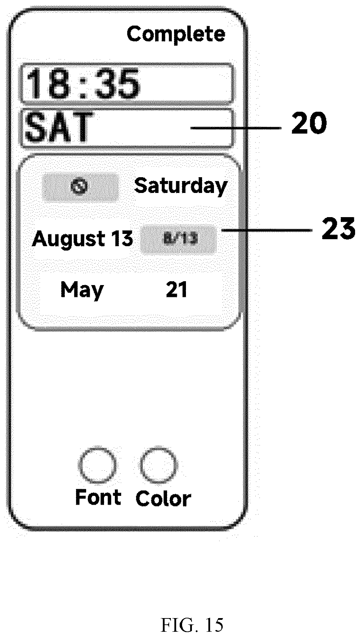

FIG. 15 is a schematic diagram of a second-level sub-page for editing the lock screen display content of the lock screen interface according to an example embodiment. When it is detected that the user clicks or taps on the second text sub-region 20 in the lock screen text region, the electronic device displays the second-level sub-page 23 as shown in FIG. 15. The second-level sub-page 23 obscures a text sub-region below the second text sub-region. For example, the second-level sub-page 23 may obscure the third text sub-region 21 and the fourth text sub-region 22.

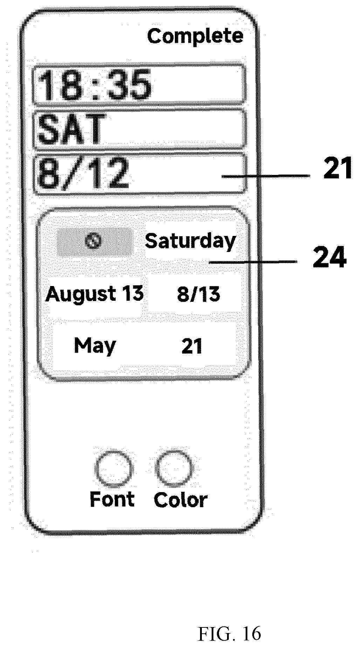

FIG. 16 is a schematic diagram of a second-level sub-page for editing the lock screen display content of the lock screen interface according to an example embodiment. When it is detected that the user clicks or taps on the third text sub-region 21 in the lock screen text region 18, the electronic device displays the second-level sub-page 24 as shown in FIG. 16. The second-level sub-page 24 obscures the fourth text sub-region 22 below the third text sub-region 21.

In step S63, in response to detecting that the user selects a text option, the second-level page is returned to and displayed. A lock screen text corresponding to the text option selected by the user is displayed in the text sub-region selected by the user on the second-level page.

In an embodiment of the present disclosure, when it is detected that the user selects a text option on the second-level sub-page, the electronic device returns back to display the second-level page, and edits the corresponding text sub-region on the second-level page based on the text option selected by the user to make the text sub-region display the text option selected by the user.

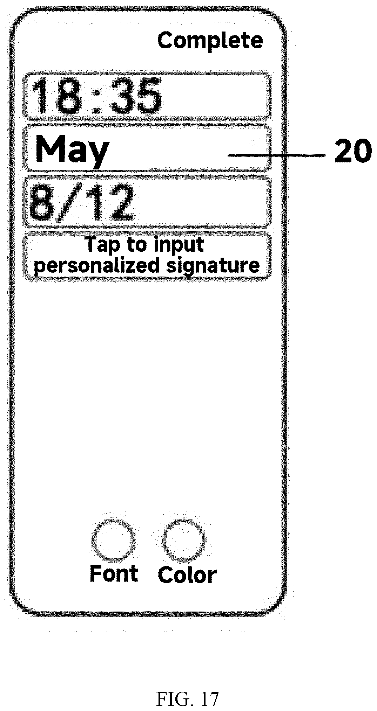

FIG. 17 is a schematic diagram of a second-level page for editing the lock screen display content of the lock screen interface according to an example embodiment. When it is detected that the user selects the text option of "May" on the second-level sub-page 23 as shown in FIG. 15, the electronic device returns back to the second-level page and applies the text option of "May" selected by the user to the second text sub-region 20 on the second-level page as shown in FIG. 17.

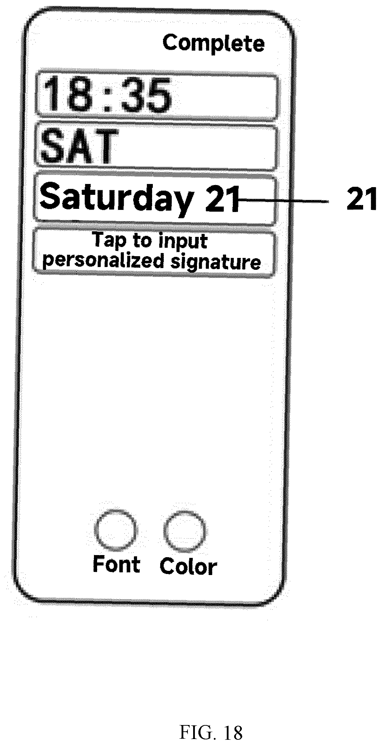

FIG. 18 is a schematic diagram of a second-level page for editing the lock screen display content of the lock screen interface according to an example embodiment. When it is detected that the user selects the text option of "Saturday 21" on the second-level sub-page as shown in FIG. 16, the electronic device returns back to the second-level page and applies the text option of "Saturday 21" selected by the user to the third text sub-region 21 on the second-level page as shown in FIG. 18.

In an embodiment of the present disclosure, each text sub-region in the lock screen text region may be edited, thereby providing more options for users to personalize the lock screen interface, and thereby improving the user experience of setting the lock screen interface.

In an embodiment of the present disclosure, the second-level sub-page may be displayed through a pop-up window. The pop-up window includes text option(s) for editing the second-level sub-page.

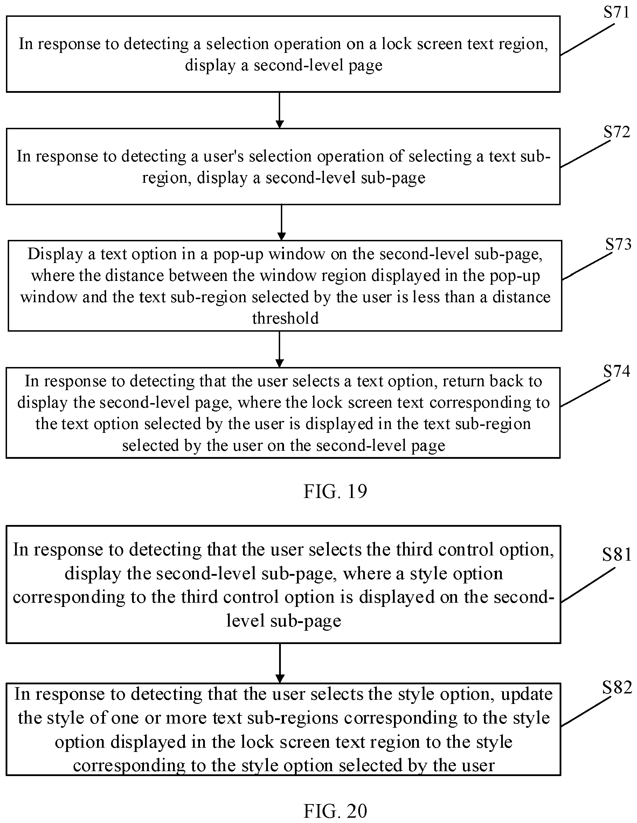

FIG. 19 is a flowchart of a method for editing a lock screen interface based on editing a lock screen content displayed on the lock screen interface according to an example embodiment. As shown in FIG. 19, the method for editing the lock screen interface is applied in a terminal and includes the following steps.

In step S71, in response to detecting a selection operation on a lock screen text region, a second-level page is displayed.

In step S72, in response to detecting a user's selection operation of selecting a text sub-region, a second-level sub-page is displayed.

In step S73, a text option is displayed in a pop-up window on the second-level sub-page. The distance between the window region displayed in the pop-up window and the text sub-region selected by the user is less than a distance threshold.

In an embodiment of the present disclosure, when the electronic device detects the user's selection operation of selecting the text sub-region, text option(s) for editing the text sub-region is(are) displayed in the form of a pop-up window on the second-level sub-page. The window displayed by the pop-up window may be located below the text sub-region selected by the user, and the distance from the text sub-region is less than a preset distance threshold.

In an example, when it is detected that the user clicks or taps on the second text sub-region 20 on the second-level page, a pop-up window as shown in FIG. 15 is displayed on the second-level sub-page 23. The pop-up window corresponding to the second-level sub-page 23 shown in FIG. 15 may be located below the second text sub-region 20 and may be displayed immediately adjacent to the second text sub-region 20.

In an example, when it is detected that the user clicks or taps on the third text sub-region 21 on the second-level page, a pop-up window as shown in FIG. 16 is displayed on the second-level sub-page 24. The pop-up window corresponding to the second-level sub-page 24 shown in FIG. 16 may be located below the third text sub-region 21 and may be displayed immediately adjacent to the third text sub-region 21.

In step S74, in response to detecting that the user selects a text option, the second-level page is returned to and displayed. The lock screen text corresponding to the text option selected by the user is displayed in the text sub-region selected by the user on the second-level page.

In the embodiments of the present disclosure, steps S71, S72 and S74 are consistent with steps S61, S62 and S63, and details of the steps will be omitted here.

In the implementations of the present disclosure, by displaying, on the second-level sub-page, a pop-up window including text option(s) and with a distance from the text sub-region selected by the user being less than the distance threshold, the user can edit the text sub-region at a position closer to the text sub-region selected by the user. This increases convenience for editing, and thus improves user experience of editing the lock screen interface.

In an implementation of the present disclosure, a third control option for editing a lock screen text style may also be displayed on the second-level page.

The lock screen text style at least includes the font of the lock screen text and the color of the lock screen text.

FIG. 20 is a flowchart of a method for editing a lock screen interface based on editing a lock screen content displayed on the lock screen interface according to an example embodiment. As shown in FIG. 20, the method for editing the lock screen interface is applied in a terminal and includes the following steps.

In step S81, in response to detecting that the user selects a third control option, a second-level sub-page is displayed. A style option corresponding to the third control option is displayed on the second-level sub-page.

The style option displayed on the second-level sub-page corresponds to one or more text sub-regions on the second-level page.

In an embodiment of the present disclosure, when the electronic device detects that the user clicks or taps on the third control option on the second-level page, the style option corresponding to the third control option is displayed on the second-level sub-page.

In an example, as shown in FIG. 13, the second-level page includes a third control option 25 for editing the lock screen text style, including a font control 26 and a color control 27. Based on the user's selection of different control options, different second-level sub-pages may be displayed. The style options on the second-level sub-pages corresponding to different controls may be different.

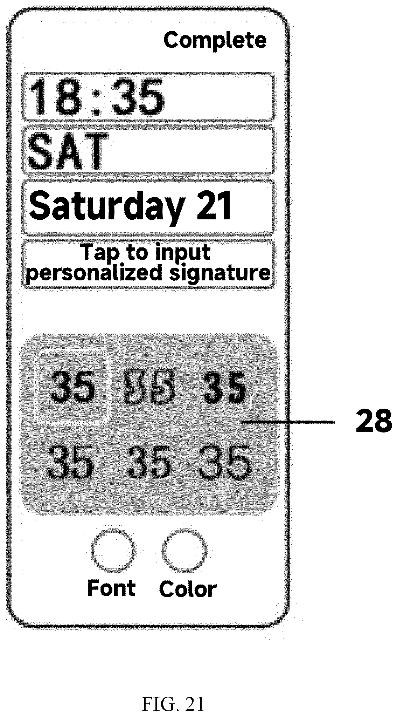

FIG. 21 is a schematic diagram of a second-level sub-page for editing the lock screen display content of the lock screen interface according to an example embodiment. When the electronic device detects that the user clicks or taps on the font control option 26 on the second-level page, a second-level sub-page 28 as shown in FIG. 21 is displayed.

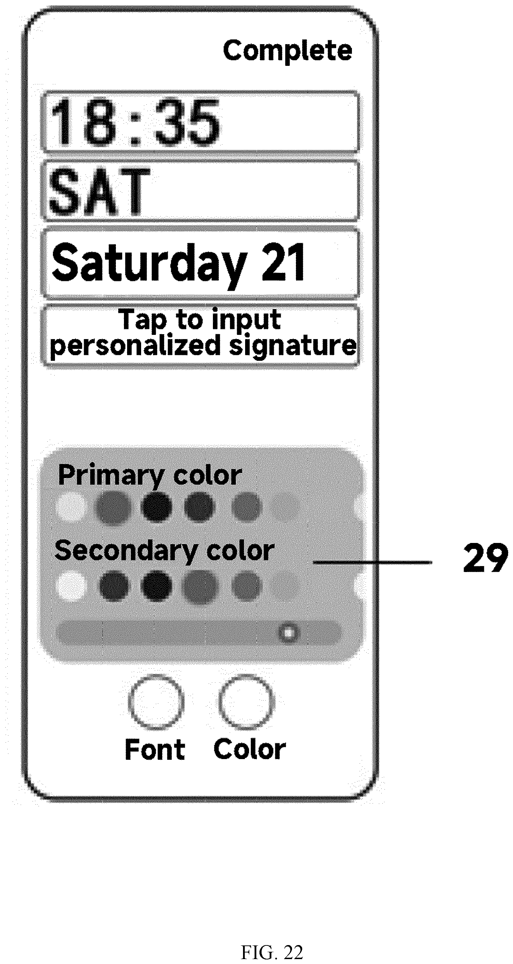

FIG. 22 is a schematic diagram of a second-level sub-page for editing the lock screen display content of the lock screen interface according to an example embodiment. When the electronic device detects that the user clicks or taps on the color control option 27 on the second-level page, a second-level sub-page 29 as shown in FIG. 22 is displayed.

In step S82, in response to detecting that the user selects the style option, the style of one or more text sub-regions corresponding to the style option displayed in the lock screen text region is updated to the style corresponding to the style option selected by the user.

In an embodiment of the present disclosure, the electronic device detects that the user selects a different style option on the second-level sub-page, and updates the style of one or more text sub-regions corresponding to the style option in the lock screen text region to the style corresponding to the style option selected by the user

In an example, as shown in FIG. 21, when it is detected that the user selects the first font style option on the second sub-page 28, the electronic device may change the font style of all text sub-regions on the second-level page to the first font style option on the second sub-page 28.

In an example, as shown in FIG. 22, when it is detected that the user selects the first color option as the main color option in the color style option on the second sub-page 29 as, the electronic device may update the color of the text sub-region corresponding to the main color option on the second page to the color corresponding to the first color option. When it is detected that the user selects the second color option as the secondary color option in the color style option on the second sub-page, the electronic device may update the color of the text sub-region corresponding to the secondary color option on the second-level page to the color corresponding to the second color option. For example, when the electronic device detects that the primary color option selected by the user from among the color style options on the second sub-page is red and the secondary color option is blue, the font color of the first text sub-region and the second text sub-region on the second-level page as shown in FIG. 13 may be updated to red, and the font color of the third text sub-region, the fourth text sub-region and the fifth text sub-region may be updated to blue.

In an embodiment of the present disclosure, the text style can be adjusted for part or all of the text sub-regions on the second-level page, thereby providing more options for the user to personalize the lock screen interface, and thereby improving the user experience in setting of the lock screen interface.

The method of editing the lock screen interface will be explained with reference to the following examples in the present disclosure.

In an embodiment of the present disclosure, when the electronic device detects the user's operation of long-pressing the background of the lock screen interface, the first-level page 1 shown in FIG. 3 is displayed. When the electronic device detects that the user clicks or taps on the first control option 4 on the first-level page, that is, when the customize control is selected, the second-level page 5 as shown in FIG. 4 is displayed. When it is detected that the user clicks or taps on the second control option 6 (that is, the wallpaper control) on the second-level page 5, the second-level sub-page 10 as shown in FIG. 6 is displayed on the top layer. Based on the wallpaper selected by the user on the second-level sub-page 10 as shown in FIG. 6, the electronic device returns to the second-level page 10 as shown in FIG. 7, where the second-level sub-page as shown in FIG. 7 may display the wallpaper selected by the user on the second-level sub-page 10 shown in FIG. 6.

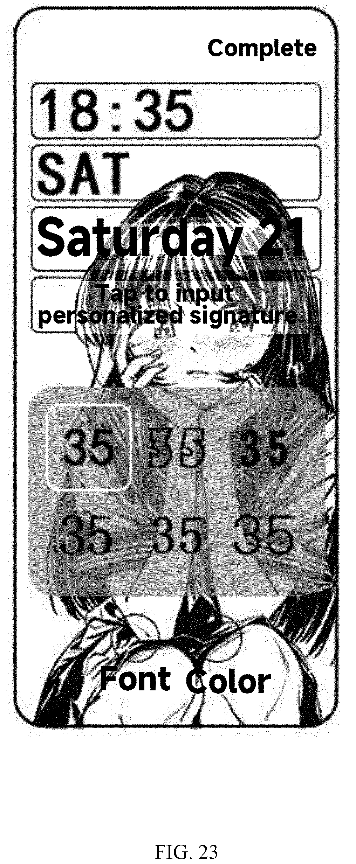

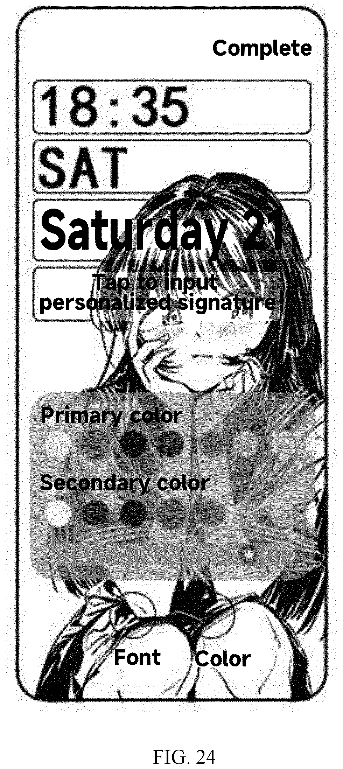

In an embodiment of the present disclosure, when it is detected that the user clicks or taps on the lock screen text region 18 on the second-level page as shown in FIG. 7, the electronic device enters the second-level page as shown in FIG. 14. When it is detected that the user clicks or taps on the third control option 25 (that is, the font control) on the second-level page, the second-level sub-page 23 as shown in FIG. 23 is displayed. Based on the font control selected by the user on the second-level sub-page, the font of all text sub-regions is adjusted. When it is detected that the user clicks or taps on the third control option 25 (that is, the color control) on the second-level page, the second-level sub-page 24 as shown in FIG. 24 is displayed. Based on the color control selected by the user on the second-level sub-page, the color of the text sub-region corresponding to the primary color control is adjusted, and the color of the text sub-region corresponding to the secondary color control is adjusted. FIG. 23 and FIG. 24 are schematic diagrams of a second-level sub-page for editing the lock screen display content of the lock screen interface according to an example embodiment.

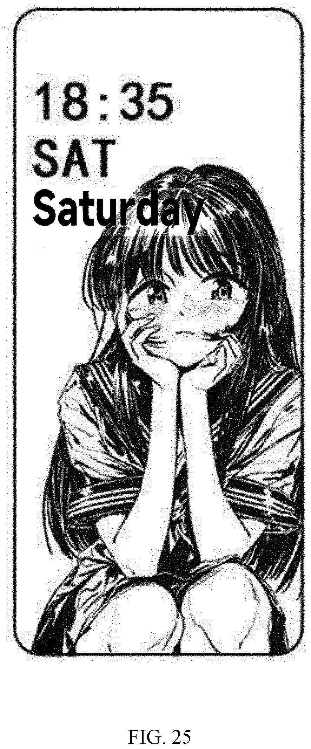

In an embodiment of the present disclosure, the lock screen page after the user edits the lock screen interface may be displayed on the second-level page. When a user's operation of setting the current page as the lock screen is detected, the lock screen style modified by the user on the second-level page is applied to the lock screen interface. For example, when it is detected that the user clicks or taps an apply operation on the second-level page, the electronic device returns to the lock interface of lock screen editing interface, and apply the edited lock screen page to the lock screen interface as shown in FIG. 25. FIG. 25 is a schematic diagram of a situation where a lock screen page is applied according to an example embodiment.

Based on the same concept, embodiments of the present disclosure also provide an apparatus for editing a lock screen interface.

The apparatus for editing a lock screen interface provided by the embodiments of the present disclosure may include hardware structure(s) and/or software module(s) corresponding to respective functions. Combined with the units and algorithm steps of each example disclosed in the embodiments of the present disclosure, the embodiments of the present disclosure can be implemented in the form of hardware or a combination of hardware and computer software. Whether a function is implemented by hardware or computer software driving the hardware depends on specific application and design constraints of the technical solutions. Those skilled in the art can use different methods to implement the described functions for each specific application, but such implementation should not be considered to go beyond the scope of the technical solutions of the embodiments of the present disclosure.

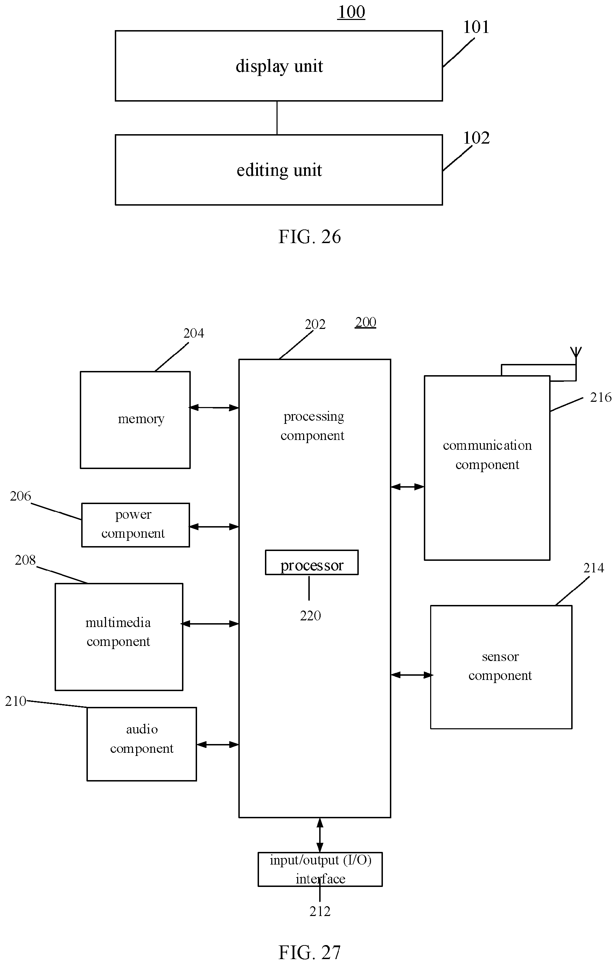

FIG. 26 is a block diagram of an apparatus for editing a lock screen interface according to an example embodiment. Referring to FIG. 26, the apparatus 100 includes a display unit 101 and an editing unit 102.

The display unit 101 is configured to, in response to detecting an editing operation which is used to edit the lock screen interface, display a first page on a top layer based on a content to be edited corresponding to the editing operation, wherein a content option for editing the content to be edited is displayed on the first page.

The editing unit 102 is configured to edit the content to be edited based on a content option selected by a user on the first page.

In an implementation, the displaying unit 101 detects the editing operation by: receiving the editing operation on a lock screen editing interface, wherein the editing operation is used to trigger editing of a pre-set template of the lock screen interface displayed on the lock screen interface; the display unit 101 displays the first page on the top layer by: displaying a first-level page, wherein a first control option is displayed on the first-level page, and selection of the first control option is used to trigger editing of a template content in the pre-set template; and based on the content to be edited corresponding to the first control option selected by the user on the first-level page, displaying a second-level page on the top layer, wherein a content option for editing the content to be edited is displayed on the second-level page; the editing unit 102 edits the content to be edited based on the content option selected by the user on the first page by: editing the content to be edited based on a content option selected by the user on the second-level page.

In an implementation, the content to be edited includes a lock screen wallpaper, the content option includes a second control option, and the second control option is used to trigger editing of the lock screen wallpaper; the editing unit 102 edits the content to be edited based on the content option selected by the user on the second-level page by: in response to detecting that the second control option on the second-level page is selected by the user, displaying a second-level sub-page, wherein different types of wallpapers are classified and displayed on the second-level sub-page, and wallpapers of a same type includes multiple different wallpapers; and based on a wallpaper selected by the user and a wallpaper type selected by the user, returning back to display the second-level page, and displaying the selected wallpaper based on the selected wallpaper type on the second-level page.

In an implementation, the types of wallpapers include a first wallpaper type, and a wallpaper belonging to the first wallpaper type supports an image cutout function; the editing unit 102 displays the selected wallpaper based on the selected wallpaper type on the second-level page by: starting a layering function in the second-level page, and displaying the selected wallpaper that supports image cutout according to a layering effect, wherein the layering function is used to support the image cutout function.

In an implementation, the display unit detects the editing operation by: receiving the editing operation on the lock screen interface, wherein the editing operation is used to trigger editing of a lock screen content displayed on the lock screen interface; the display unit 101 displays the first page on the top layer by: displaying a second-level page on the top layer, wherein a content option for editing the content to be edited corresponding to the lock screen content is displayed on the second-level page; the editing unit 102 edits the content to be edited based on the content option selected by the user on the first page by: editing the content to be edited based on a content option selected by the user on the second-level page.

In an implementation, the content to be edited includes a screen lock text, the content option includes a screen lock text region, and one or more types of lock screen texts are displayed in the screen lock text region; the editing unit 102 edits the content to be edited based on the content option selected by the user on the second-level page by: in response to detecting a selection operation on the lock screen text region, displaying the second-level page, wherein one or more text sub-regions are displayed on the second-level page, and each of the text sub-regions corresponds to a lock screen text type; in response to detecting a selection operation of the user for selecting a text sub-region, displaying a second-level sub-page, wherein a text option is displayed on a top layer of the second-level sub-page, and the text option corresponds to a lock screen text type selected by the user in the text sub-region; and in response to detecting that the user selects a text option, returning back to display the second-level page, wherein a lock screen text corresponding to the text option selected by the user is displayed in the text sub-region on the second-level page selected by the user.

In an implementation, the editing unit 102 displays the text option on the top layer of the second-level sub-page by: displaying the text option in a pop-up window on the second-level sub-page, wherein a distance between a window region displayed in the pop-up window and the text sub-region selected by the user is less than a distance threshold.

In an implementation, a third control option is displayed on the second-level page, the third control option is used to adjust a style of the lock screen text, wherein style includes at least one of: font and color; the editing unit 102 is further configured to: in response to detecting that the user selects the third control option, display the second-level sub-page, wherein a style option corresponding to the third control option is displayed on the second-level sub-page, and the style option displayed on the second-level sub-page corresponds to one or more text sub-regions on the second-level page; and in response to detecting that the user selects a style option, update a style of one or more text sub-regions corresponding to the style option displayed in the lock screen text region to a style corresponding to the style option selected by the user.

Regarding the apparatuses in the above embodiments, the specific manner in which each module performs operations has been described in detail in the embodiments related to the methods, and will not be described in detail here.

FIG. 27 is a block diagram of an apparatus 200 for editing a lock screen interface according to an example embodiment. For example, the apparatus 200 may be a mobile phone, a computer, digital broadcast terminal, a messaging device, a gaming console, a tablet, a medical device, exercise equipment, a personal digital assistant, and the like.

Referring to FIG. 27, the apparatus 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the apparatus 200, such as the operations associated with display, telephone calls, data communications, camera operations, and recording operations. The processing component 202 may include one or more processors 220 to execute instructions to perform all or part of the steps in the above described methods. Moreover, the processing component 202 may include one or more modules which facilitate the interaction between the processing component 202 and other components. For instance, the processing component 202 may include a multimedia module to facilitate the interaction between the multimedia component 208 and the processing component 202.

The memory 204 is configured to store various types of data to support the operation of the apparatus 200. Examples of such data include instructions for any applications or methods operated on the apparatus 200, contact data, phonebook data, messages, pictures, video, etc. The memory 204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 provides power to various components of the apparatus 200. The power component 206 may include a power management system, one or more power sources, and any other components associated with the generation, management, and distribution of power in the apparatus 200.

The multimedia component 208 includes a screen providing an output interface between the apparatus 200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 208 includes a front camera and/or a rear camera. The front camera and the rear camera may receive an external multimedia datum while the apparatus 200 is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone ("MIC") configured to receive an external audio signal when the apparatus 200 is in an operation mode, such as a call mode, a recording mode, and a voice recognition mode. The received audio signal may be further stored in the memory 204 or transmitted via the communication component 216. In some embodiments, the audio component 210 further includes a speaker to output audio signals.

The I/O interface 212 provides an interface between the processing component 202 and peripheral interface modules, such as a keyboard, a click wheel, buttons, and the like. The buttons may include, but are not limited to, a home button, a volume button, a starting button, and a locking button.

The sensor component 214 includes one or more sensors to provide status assessments of various aspects of the apparatus 200. For instance, the sensor component 214 may detect an open/closed status of the apparatus 200, relative positioning of components, e.g., the display and the keypad, of the apparatus 200, a change in position of the apparatus 200 or a component of the apparatus 200, a presence or absence of user contact with the apparatus 200, an orientation or an acceleration/deceleration of the apparatus 200, and a change in temperature of the apparatus 200. The sensor component 214 may include a proximity sensor configured to detect the presence of nearby objects without any physical contact. The sensor component 214 may also include a light sensor, such as a CMOS or CCD image sensor, for use in imaging applications. In some embodiments, the sensor component 214 may also include an accelerometer sensor, a gyroscope sensor, a magnetic sensor, a pressure sensor, or a temperature sensor.

The communication component 216 is configured to facilitate communication, wired or wirelessly, between the apparatus 200 and other devices. The apparatus 200 can access a wireless network based on a communication standard, such as WiFi, 2G, or 3G, or a combination thereof. In one example embodiment, the communication component 216 receives a broadcast signal or broadcast associated information from an external broadcast management system via a broadcast channel. In one example embodiment, the communication component 216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 204 including instructions executable by the processor 220 in the apparatus 200, for performing the above-described methods. For example, the non-transitory computer-readable storage medium may be a ROM, a Random Access Memory (RAM), a CD-ROM, a magnetic tape, a floppy disc, an optical data storage device, and the like.

It can be understood that "plurality/multiple" in the present disclosure refers to two or more than two, and other quantifiers are similar to it. The expression "and/or" describes an association relationship between associated objects, indicating that there can be three relationships. For example, A and/or B can mean three situations below: A alone, B alone, and A and B together. The character "P' generally indicates that the related objects before and after the character are in an "or" relationship. The singular forms "alan", "the" and "said" are intended to include a plural form as well, unless the context clearly indicates otherwise.

It is further understood that the terms "first", "second", etc. are used to describe various information, but such information should not be limited to these terms. These terms are only used to distinguish information of the same type from each other and do not imply a specific order or importance. In fact, expressions such as "first" and "second" can be used interchangeably. For example, without departing from the scope of the present disclosure, first information may also be called second information, and similarly, second information may also be called first information.

It is further understood that the terms "center", "lateral", "longitudinal", "front", "rear", "upper", "lower", "left", "right", "vertical" , "horizontal", "top", "bottom", "inner", "outer", etc. indicate orientations or positional relationships based on the orientations or positional relationships shown in the drawings. These terms are only for convenience in describing embodiments and simplifying the description, but are not used to indicate or imply that an apparatus or element referred to must have a particular orientation or must be constructed and operate in a particular orientation.

It should be further understood that, unless otherwise specified, "connection" includes a direct connection without other components between the two, and also includes an indirect connection with other elements between the two.

It should be further understood that although operations are described in a specific order in the drawings in the embodiments of the present disclosure, this should not be construed as that these operations are needed to be performed in the specific order shown in the drawings or in a serial order, or that all operations shown need to be performed to obtain desired result(s). In certain circumstances, multitasking and parallel processing may be advantageous.

Other embodiments of the present disclosure will be apparent to those skilled in the art from consideration of the specification and practice of the disclosure disclosed here. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for editing a lock screen interface, comprising:
in response to detecting an editing operation to edit the lock screen interface, displaying (S 11) a first page on a top layer based on a content to be edited corresponding to the editing operation, wherein at least one content option for editing the content to be edited is displayed on the first page; and
editing (S12) the content to be edited based on selection of a content option from the at least one content option on the first page.

2. The method according to claim 1, wherein detecting the editing operation comprises:
receiving (S21) the editing operation on a lock screen editing interface, wherein the editing operation triggers editing of a pre-set template of the lock screen interface displayed on the lock screen interface;
wherein displaying the first page on the top layer comprises:
displaying (S22) a first-level page, wherein a first control option is displayed on the first-level page, and selection of the first control option triggers editing of a template content in the pre-set template; and
based on the content to be edited corresponding to the first control option selected on the first-level page, displaying (S23) a second-level page on the top layer, wherein the at least one content option for editing the content to be edited is displayed on the second-level page;
wherein editing the content to be edited based on selection of the content option from the at least one content option on the first page comprises:
editing (S24) the content to be edited based o the content option on the second-level page.

3. The method according to claim 2, wherein the content to be edited comprises a lock screen wallpaper, the at least one content option comprises a second control option, and the second control option is configured to trigger editing of the lock screen wallpaper;
wherein editing of the content to be edited based on the content option on the second-level page comprises:
in response to detecting that the second control option on the second-level page is selected, displaying (S31) a second-level sub-page, wherein different types of wallpapers are classified and displayed on the second-level sub-page, and wallpapers of a same type comprises multiple different wallpapers; and
based on selection of a wallpaper and selection of a wallpaper type, returning back to display the second-level page, and displaying (S32) the selected wallpaper based on the selected wallpaper type on the second-level page.

4. The method according to claim 3, wherein the types of wallpapers comprise a first wallpaper type, and a wallpaper belonging to the first wallpaper type supports an image cutout function;
wherein displaying the selected wallpaper based on the selected wallpaper type on the second-level page comprises:
starting a layering function in the second-level page, and displaying (S42) the selected wallpaper that supports image cutout according to a layering effect, wherein the layering function is configured to support the image cutout function.

5. The method according to claim 1, wherein detecting the editing operation comprises:
receiving (S51) the editing operation on the lock screen interface, wherein the editing operation triggers editing of a lock screen content displayed on the lock screen interface;
wherein displaying the first page on the top layer comprises:
displaying (S52) a second-level page on the top layer, wherein a content option for editing the content to be edited corresponding to the lock screen content is displayed on the second-level page;
wherein editing the content to be edited based on the selection of the content option on the first page comprises:
editing (S53) the content to be edited based on selection of the content option on the second-level page.

6. The method according to claim 2 or 5, wherein the content to be edited comprises a screen lock text, the at least one content option comprises a screen lock text region, and one or more types of lock screen texts are displayed in the screen lock text region;
wherein editing the content to be edited based on selection of the content option on the second-level page comprises:
in response to detecting a selection operation on the lock screen text region, displaying (S61) the second-level page, wherein one or more text sub-regions are displayed on the second-level page, and each of the text sub-regions corresponds to a lock screen text type;
in response to detecting a selection operation of selecting a text sub-region from the one or more text sub-regions, displaying (S62) a second-level sub-page, wherein at least one text option is displayed on a top layer of the second-level sub-page, and the at least one text option corresponds to a lock screen text type selected in the text sub-region; and
in response to detecting selection of a text option from the at least one text option, returning back (S63) to display the second-level page, wherein a lock screen text corresponding to the selected text option is displayed in the text sub-region on the second-level page selected by the user.

7. The method according to claim 6, wherein displaying the at least one text option on the top layer of the second-level sub-page comprises:
displaying (S73) the at least one text option in a pop-up window on the second-level sub-page, wherein a distance between a window region displayed in the pop-up window and the text sub-region selected by the user is less than a distance threshold.

8. The method according to claim 6 or 7, wherein at least one third control option is displayed on the second-level page, the at least one third control option is configured to adjust a style of the lock screen text, and the style comprises at least one of: font and color; and
wherein the method further comprises:
in response to detecting selection of a third control option from the at least one third control option, displaying (S81) the second-level sub-page, wherein at least one style option corresponding to the selected third control option is displayed on the second-level sub-page, and the at least one style option displayed on the second-level sub-page corresponds to one or more text sub-regions on the second-level page; and
in response to detecting selection of a style option from the at least one style option, updating (S82) a style of one or more text sub-regions corresponding to the selected style option displayed in the lock screen text region to a style corresponding to the style option selected by the user

9. An apparatus for editing a lock screen interface, comprising:
a display unit (101) configured to, in response to detecting an editing operation to edit the lock screen interface, display a first page on a top layer based on a content to be edited corresponding to the editing operation, wherein at least one content option for editing the content to be edited is displayed on the first page; and
an editing unit (102) configured to edit the content to be edited based on selection of a content option from the at least one content option on the first page.

10. The apparatus according to claim 9, wherein the displaying unit is configured to:
receive the editing operation on a lock screen editing interface, wherein the editing operation triggers editing of a pre-set template of the lock screen interface displayed on the lock screen interface;
display a first-level page, wherein a first control option is displayed on the first-level page, and selection of the first control option triggers editing of a template content in the pre-set template;
based on the content to be edited corresponding to the first control option selected on the first-level page, display a second-level page on the top layer, wherein the at least one content option for editing the content to be edited is displayed on the second-level page;
wherein the editing unit is configured to:
edit the content to be edited based on the content option on the second-level page.

11. The apparatus according to claim 10, wherein the content to be edited comprises a lock screen wallpaper, the at least one content option comprises a second control option, and the second control option is configured to trigger editing of the lock screen wallpaper;
wherein the editing unit is configured to:
in response to detecting that the second control option on the second-level page is selected, display a second-level sub-page, wherein different types of wallpapers are classified and displayed on the second-level sub-page, and wallpapers of a same type comprises multiple different wallpapers; and
based on selection of a wallpaper and selection of a wallpaper type, return back to display the second-level page, and display the selected wallpaper based on the selected wallpaper type on the second-level page.

12. The apparatus according to claim 11, wherein the types of wallpapers comprise a first wallpaper type, and a wallpaper belonging to the first wallpaper type supports an image cutout function;
wherein the editing unit is configured to:
start a layering function in the second-level page, and display the selected wallpaper that supports image cutout according to a layering effect, wherein the layering function is used to support the image cutout function.

13. The apparatus according to claim 9, wherein the display unit is configured to:
receive the editing operation on the lock screen interface, wherein the editing operation triggers editing of a lock screen content displayed on the lock screen interface;
display a second-level page on the top layer, wherein a content option for editing the content to be edited corresponding to the lock screen content is displayed on the second-level page;
wherein the editing unit is configured to:
edit the content to be edited based on selection of the content option on the second-level page.

14. The apparatus according to claim 10 or 13, wherein the content to be edited comprises a screen lock text, the at least one content option comprises a screen lock text region, and one or more types of lock screen texts are displayed in the screen lock text region;
wherein the editing unit is configured to:
in response to detecting a selection operation on the lock screen text region, display the second-level page, wherein one or more text sub-regions are displayed on the second-level page, and each of the text sub-regions corresponds to a lock screen text type;
in response to detecting a selection operation of selecting a text sub-region from the one or more text sub-region, display a second-level sub-page, wherein at least one text option is displayed on a top layer of the second-level sub-page, and the at least one text option corresponds to a lock screen text type selected in the text sub-region; and
in response to detecting selection of a text option from the at least one text option, return back to display the second-level page, wherein a lock screen text corresponding to the selected text option is displayed in the text sub-region on the second-level page selected by the user.

15. A storage medium, wherein instructions are stored in the storage medium, when the instructions in the storage medium are executed by a processor of a terminal, the terminal is caused to carry out the method for editing a lock screen interface according to any one of claims 1 to 8.
